# EUROPÄISCHE PATENTANMELDUNG

(11) **EP 1 273 473 A2**
(43) Veröffentlichungstag der Anmeldung: **08.01.2003**
(21) Anmeldenummer: 02014123.0
(22) Anmeldetag: 25.06.2002
(51) Int. Cl.: B60K 17/344, B60K 17/22

(54) **Getriebevorrichtung**

(30) Priorität: 07.07.2001 DE 10133118
(71) Anmelder: DaimlerChrysler AG, 70567 Stuttgart (DE)
(72) Erfinder: Gansloser, Philip, 73340 Amstetten (DE); Greiner, Jürgen, Dr., 71686 Remseck (DE); Sandner, Helmut, 73765 Neuhausen (DE)

(57) **Zusammenfassung**

Die Erfindung geht aus von einer Getriebevorrichtung für ein Kraftfahrzeug, die ein für einen Längseinbau vorgesehenes Kraftfahrzeuggetriebe (14) mit einer im eingebauten Zustand zum Heck des Kraftfahrzeugs weisenden Getriebeausgangswelle (13) aufweist, die über eine Abtriebswelle (12) eines Seitenabtriebs (16) und über eine Gelenkwelle (10) antriebsmäßig mit einer Eingangswelle (11) eines Vorderachsgetriebes (15) verbindbar ist.

Es wird vorgeschlagen, daß zur Reduzierung zumindest eines Knickwinkels der Gelenkwelle wenigstens eine mit der Gelenkwelle korrespondierende Welle zur Getriebeausgangswelle des Kraftfahrzeuggetriebes verschwenkt ist.

## Beschreibung

Die Erfindung betrifft eine Getriebevorrichtung gemäß Patentanspruch 1.

Aus der US 4,289,213 ist bereits eine Getriebevorrichtung für ein Kraftfahrzeug bekannt, die ein für einen Längseinbau vorgesehenes Kraftfahrzeuggetriebe mit einer im eingebauten Zustand zum Heck des Kraftfahrzeugs weisenden Getriebeausgangswelle aufweist. Die Getriebeausgangswelle ist über einen Seitenabtrieb und über eine Gelenkwelle antriebsmäßig mit einer Eingangswelle eines Vorderachsgetriebes verbindbar. Diese Gelenkwelle ist dabei seitlich an einem Getriebegehäuse des Kraftfahrzeuggetriebes vorbei zum Vorderachsgetriebe geführt. Eine mit der Gelenkwelle über ein Kreuzgelenk verbundene Zwischenwelle ist zur Getriebeausgangswelle des Kraftfahrzeuggetriebes verschwenkt.

Ferner sind insbesondere Getriebevorrichtungen bei Allradantrieben bekannt, die ein ursprünglich für einen Heckantrieb konzipiertes Automatikgetriebe besitzen und bei denen nach einem sogenannten "add-on-Prinzip" eine zusätzliche Antriebsverbindung über eine Gelenkwelle mit einem Vorderachsgetriebe hergestellt wird.

Der Erfindung liegt die Aufgabe zugrunde, eine gattungsbildende Getriebevorrichtung bereitzustellen, die in einen schmalen Fahrzeugtunnel integrierbar ist und dennoch kleine Knickwinkel der Gelenkwelle aufweist. Sie wird gemäß der Erfindung durch die Merkmale des Anspruchs 1 gelöst. Weitere Ausgestaltungen ergeben sich aus den Unteransprüchen.

Die Erfindung geht aus von einer Getriebevorrichtung für ein Kraftfahrzeug, die ein für einen Längseinbau vorgesehenes Kraftfahrzeuggetriebe mit einer im eingebauten Zustand zum Heck des Kraftfahrzeugs weisenden Getriebeausgangswelle aufweist, die über eine Abtriebswelle eines Seitenabtriebs und über eine Gelenkwelle antriebsmäßig mit einer Eingangswelle eines Vorderachsgetriebes verbindbar ist.

Es wird vorgeschlagen, daß zur Reduzierung zumindest eines Knickwinkels der Gelenkwelle wenigstens eine mit der Gelenkwelle korrespondierende Welle zur Getriebeausgangswelle des Kraftfahrzeuggetriebes verschwenkt ist. Es kann ein kleiner Achsenabstand zwischen der Getriebeausgangswelle des Kraftfahrzeuggetriebes und der Abtriebswelle des Seitenabtriebs trotz kleiner Knickwinkel ermöglicht werden. Der Seitenabtrieb kann platzsparend, leicht und kostengünstig ausgeführt und insbesondere kann aufgrund des platzsparenden Seitenabtriebs die Getriebevorrichtung in einen schmalen Kraftfahrzeugtunnel integriert werden.

Die Verschwenkung der Welle des Seitenabtriebs wird dadurch vorteilhaft erreicht, dass der Seitenantrieb als Winkelgetriebe mit Kegelrädern ausgeführt ist, oder indem der Seitenabtrieb als Räderkette mit zumindest drei Zahnrädern ausgebildet ist, wobei zumindest ein Zahnrad kegelig ausgeführt ist. Ein als Räderkette ausgeführter Seitenabtrieb kann besonders platzsparend ausgeführt werden.

Die verschwenkte Welle, welche im Kraftfluß zwischen der Getriebeausgangswelle und der Gelenkwelle liegt, kann im Extremfall als außenverzahnte Hohlwelle ausgestaltete sein, welche radial innen ein Gelenk der Gelenkwelle aufnimmt.

Die erfindungsgemäße Lösung kann bei reinen Vorderradantrieben mit manuellen Schaltgetrieben und insbesondere mit Automatikgetrieben eingesetzt werden. Besonders vorteilhaft ist die erfindungsgemäße Lösung jedoch bei Allradantrieben anwendbar, die ein für einen Heckantrieb konzipiertes Kraftfahrzeuggetriebe, insbesondere Automatikgetriebe, aufweisen, d.h. bei denen die Getriebeausgangswelle mit einer Eingangswelle eines Hinterachsgetriebes antriebsmäßig verbindbar ist, und die Getriebeausgangswelle nach dem sogenannten "add-on-Prinzip" über eine Abtriebswelle eines Seitenabtriebs und über eine Gelenkwelle antriebsmäßig mit einer Eingangswelle eines Vorderachsgetriebes verbindbar ist. Trotz eines im wesentlichen auf einen reinen Heckantrieb ausgelegten Kraftfahrzeuggetriebes kann bei kleinen Knickwinkeln die Gelenkwelle mit einem kleinen Abstand entlang einem Gehäuse des Kraftfahrzeuggetriebes geführt werden. Rohbauänderungen an einem Tunnel für Allradvarianten eines grundsätzlich mit einem reinen Heckantrieb ausgestatteten Kraftfahrzeugs können auf ein Minimum reduziert werden oder eventuell ganz entfallen.

Vorteilhaft ist entweder die mit der Gelenkwelle korrespondierende Eingangswelle des Vorderachsgetriebes und/oder die mit der Gelenkwelle korrespondierende Abtriebswelle des Seitenabtriebs zur Getriebeausgangswelle verschwenkt ausgeführt, und zwar jeweils vertikal und/oder horizontal. Anstatt die Eingangswelle des Vorderachsgetriebes oder die Abtriebswelle des Seitenabtriebs zu verschwenken, ist grundsätzlich auch denkbar, weitere verschwenkte Zwischenwellen vorzusehen.

Die Eingangswelle des Vorderachsgetriebes ist dabei vorteilhaft vertikal und/oder horizontal um einen Winkel zwischen 1° und 10° und die Abtriebswelle des Seitenabtriebs ist dabei vorteilhaft vertikal und/oder horizontal um einen Winkel zwischen 1° und 20° verschwenkt.

Um die Eingangswelle des Vorderachsgetriebes und/oder die Abtriebswelle des Seitenabtriebs zu verschwenken, sind sämtliche, dem Fachmann als sinnvoll erscheinende Konstruktionen denkbar.

Insbesondere kann jedoch eine verschwenkte Eingangswelle des Vorderachsgetriebes erreicht werden, indem entweder das gesamte Vorderachsgetriebe verschwenkt angeordnet ist, wodurch ein kostengünstiges Standardvorderachsgetriebe verwendet werden kann, oder indem das Vorderachsgetriebe vorteilhaft ein Winkelgetriebe mit einem Kreuzwinkel ungleich 90° aufweist. Im letzteren Fall können Seitenwellen des Kraftfahrzeugs standardmäßig ausgeführt werden.

In einer weiteren Ausgestaltung der Erfindung wird vorgeschlagen, daß eine Rotationsachse eines Zwischenzahnrads des als Räderkette ausgeführten Seitenabtriebs zur Getriebeausgangswelle verschwenkt ist, wodurch vorteilhaft einfach und kostengünstig ein günstiger Schwenkwinkel der Abtriebswelle des Seitenabtriebs, eine zusätzliche Lageanpassung sowie vorteilhafte Verzahnungsverhältnisse erreicht werden können.

Ferner kann Bauraum eingespart werden, indem der als Räderkette ausgeführte Seitenabtrieb um eine Rotationsachse verschwenkt ausgeführt ist, und zwar vorzugsweise um einen Winkel zwischen 20° und 40°.

Besitzt das Kraftfahrzeuggetriebe ein Getriebegehäuse mit einer angeformten Lagereinheit für den Seitenabtrieb, kann ein zusätzliches Zwischengehäuse zwischen dem Kraftfahrzeuggetriebe und dem Seitenabtrieb vermieden und es können zusätzliche Bauteile, Bauraum, Montageaufwand und Kosten eingespart werden.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- Fig. 1: eine Draufsicht einer schematisch dargestellten erfindungsgemäßen Getriebevorrichtung, wobei diese einen Seitenabtrieb mit einer Räderkette aus drei kegeligen Zahnrädern umfasst,
- Fig. 2: eine Seitenansicht der Getriebevorrichtung aus Fig. 1,
- Fig. 3: eine Vorderansicht der Getriebevorrichtung aus Fig. 1,
- Fig. 4: eine detailliert und geschnitten dargestellte Getriebevorrichtung ähnlich der aus Fig. 1 bis Fig. 3, wobei jedoch eine Räderkette des Seitenabtriebs lediglich zwei kegelige Zahnräder umfasst,
- Fig. 5: eine detailliert und geschnitten dargestellte Getriebevorrichtung ähnlich der aus Fig. 4, wobei jedoch anstelle eines Kreuzgelenkes ein anderer Gelenktyp Anwendung findet und
- Fig. 6: eine detailliert und geschnitten dargestellte Getriebevorrichtung ähnlich der aus Fig. 5, wobei jedoch für das Verteilergetriebe anstelle eines Differentialgetriebes eine Lamellenkupplung Anwendung findet.

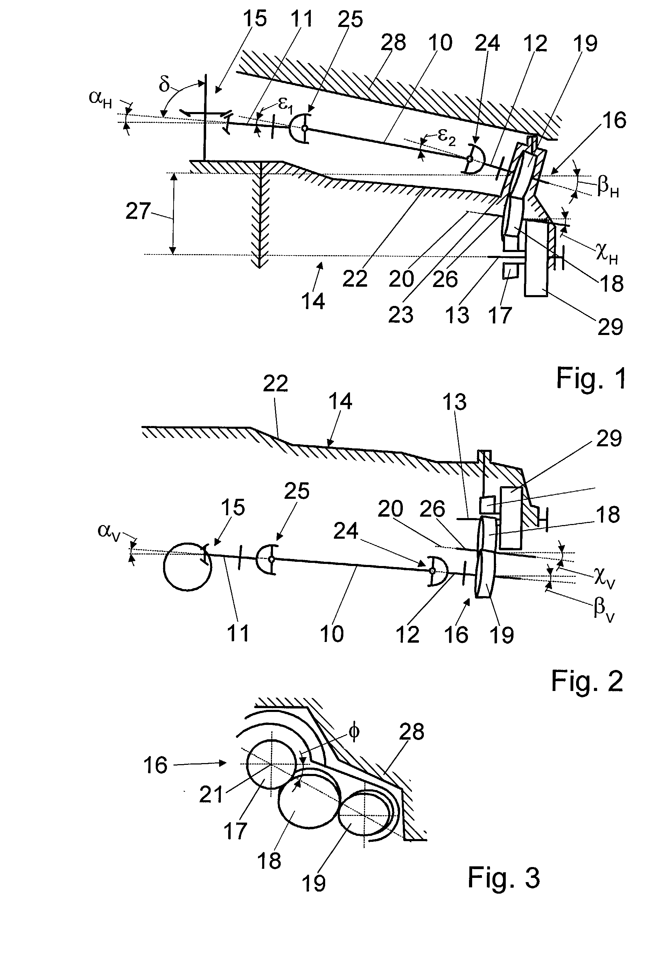

Fig. 1 zeigt eine schematische Darstellung einer erfindungsgemäßen Getriebevorrichtung für ein Kraftfahrzeug, die ein für einen Längseinbau vorgesehenes Automatikgetriebe 14 mit einer im eingebauten Zustand zum Heck des Kraftfahrzeugs weisenden Getriebeausgangswelle 13 aufweist.

Das Automatikgetriebe 14 ist grundsätzlich für einen reinen Heckantrieb konzipiert. Die Getriebeausgangswelle 13 ist im eingebauten Zustand des Automatikgetriebes 14 mit einer nicht näher dargestellten Eingangswelle eines Hinterachsgetriebes antriebsmäßig verbunden.

Das Automatikgetriebe 14 besitzt ein Getriebegehäuse 22 mit einer angeformten Lagereinheit 23 für einen Seitenabtrieb 16, so daß das Automatikgetriebe 14 kostengünstig nach einem sogenannten "add-on-Prinzip" für eine Allradvariante nutzbar ist.

Bei einer derartigen Variante ist die gegenüber der reinen Heckantriebsvariante verlängerte Getriebeausgangswelle 13 über ein Verteilergetriebe 29 mit der Eingangswelle des Hinterachsgetriebes und über das Verteilergetriebe 29 eine Abtriebswelle 12 des Seitenabtriebs 16 und über eine Gelenkwelle 10 mit zwei Ausgleichsgelenken 24, 25 antriebsmäßig mit einer Eingangswelle 11 eines Vorderachsgetriebes 15 verbunden. Über das Verteilergetriebe 29 sind Abtriebsmomente auf das Vorderachsgetriebe 15 und das Hinterachsgetriebe verteilbar sowie Drehzahldifferenzen ausgleichbar.

Die Gelenkwelle 10 schließt einen ersten Knickwinkel ε₁ mit der Eingangswelle 11 des Vorderachsgetriebes 15 und einen zweiten Knickwinkel ε₂ mit der Abtriebswelle 12 des Seitenabtriebs 16 ein. Erfindungsgemäß sind zur Reduzierung der Knickwinkel ε₁, ε₂ die mit der Gelenkwelle 10 korrespondierenden Wellen 11, 12, und zwar die Eingangswelle 11 des Vorderachsgetriebes 15 und die Abtriebswelle 12 des Seitenabtriebs 16 zur Getriebeausgangswelle 13 des Automatikgetriebes 14 verschwenkt.

Die Eingangswelle 11 des Vorderachsgetriebes 15 ist vertikal und horizontal jeweils um einen Winkel α_{H}, α_{V} von ca. 2° zur Getriebeausgangswelle 13 verschwenkt, und zwar jeweils in Richtung zur Abtriebswelle 12 des Seitenabtriebs 16 (Fig. 1 und 2).

Um einen gewünschten Schwenkwinkel der Eingangswelle 11 zu erreichen, ist das Vorderachsgetriebe 15 von einem Winkelgetriebe mit einem Kreuzwinkel δ ungleich 90° gebildet, und zwar mit einem Kreuzwinkel δ von ca. 88° (Fig. 1).

Die Abtriebswelle 12 des Seitenabtriebs 16 ist vertikal und horizontal jeweils um einen Winkel β_{H}, β_{V} von ca. 7° zur Getriebeausgangswelle 13 verschwenkt, und zwar jeweils in Richtung zur Eingangswelle 11 des Vorderachsgetriebes 15.

Der Seitenabtrieb 16 wird von einer Räderkette mit drei kegeligen Zahnrädern 17, 18, 19 gebildet, und zwar von einem auf der Getriebeausgangswelle 13 drehbar gelagerten Antriebsritzel 17, einem auf einem Lagerbolzen 26 drehbar gelagerten Zwischenrad 18 und einem auf der Abtriebswelle 12 drehfest gelagerten Abtriebsritzel 19.

Das Zwischenzahnrad 18 des Seitenabtriebs 16 besitzt eine horizontal und vertikal verschwenkte Rotationsachse 20, und zwar horizontal und vertikal um einen Winkel χ_{H}, χ_{V} von ca. 5°. Ferner ist der Seitenabtrieb 16 bzw. die Räderkette um eine Rotationsachse 21 verschwenkt ausgeführt, und zwar um einen Winkel φ von ca. 25° (Fig. 3).

Trotz eines kleinen Achsenabstands 27 zwischen der Getriebeausgangswelle 13 des Automatikgetriebes 14 und der Abtriebswelle 12 des Seitenabtriebs 16, besitzt die Gelenkwelle 10 zu ihren korrespondierenden Wellen 11, 12 kleine Knickwinkel ε₁, ε₂, und die Getriebevorrichtung kann platzsparend in einem schmalen Fahrzeugtunnel 28 integriert werden.

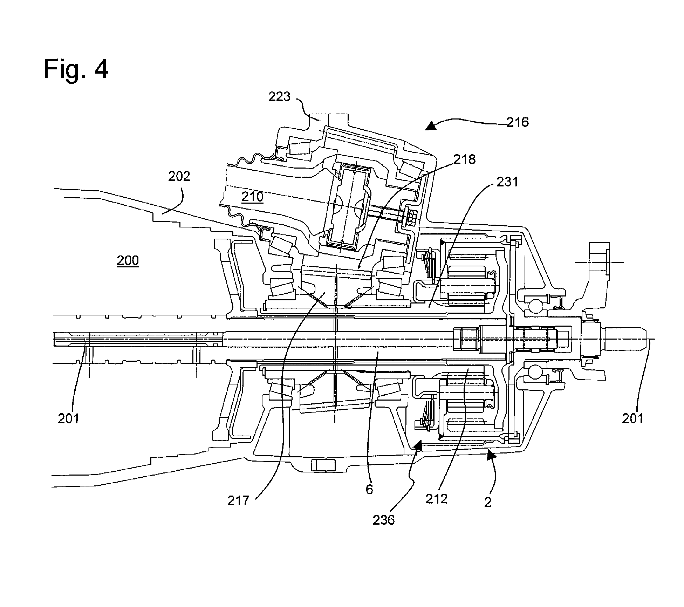

Fig. 4 zeigt eine Getriebevorrichtung, welche einen Teil eines längs eingebauten Antriebsstrangs für ein Kraftfahrzeug bildet. Der Antriebsstrang weist neben einem Automatikgetriebe 200 eine im eingebauten Zustand zum Heck des Kraftfahrzeugs weisende Getriebeausgangswelle auf. Diese Getriebeausgangswelle bildet die Eingangswelle 6 des Differentialgetriebes 2.

Das Automatikgetriebe 200 besitzt ein Getriebegehäuse 202 mit einem angeformten Lagergehäuse 223 für einen Seitenabtrieb 216, so dass das Automatikgetriebe 200 kostengünstig nach einem sogenannten "add-on-Prinzip" für eine Allradvariante nutzbar ist.

Bei einer derartigen Variante ist die gegenüber der reinen Heckantriebsvariante verlängerte Getriebeausgangswelle bzw.

Eingangswelle 6 über das Differentialgetriebe 2 und eine Heckantriebsgelenkwelle mit einer Ritzelwelle eines nicht näher dargestellten Hinterachsgetriebes derart verbunden, dass ein erster Teil des Antriebsmomentes auf das Hinterachsgetriebe übertragen wird. Ein zweiter Teil des Antriebsmomentes wird von der Eingangswelle 6 über
- das Differentialgetriebe 2,
- ein Antriebsritzel 217,
- ein Abtriebsritzel 218,
- eine Gelenkwelle 210 des Seitenabtriebs 216 und
- eine Kegelritzelwelle eines nicht näher dargestellten Vorderachsgetriebes
   auf eine Vorderachse übertragen. Mittels des Differentialgetriebes 2 sind Abtriebsmomente auf das Vorderachsgetriebe und das Hinterachsgetriebe verteilbar sowie Drehzahldifferenzen ausgleichbar.

Die Gelenkwelle 210 des Seitenabtriebs 216 ist horizontal um einen Winkel von ca. 8° zur Antriebsstranglängsachse 201 verschwenkt. Die Gelenkwelle 210 des Seitenabtriebs 216 ist vertikal um einen Winkel von ca. 4° zur Antriebsstranglängsachse 201 verschwenkt.

Der Seitenabtrieb 216 wird von zwei Zahnrädern gebildet, und zwar von dem Antriebsritzel 217, und das mit diesem kämmende Abtriebsritzel 218. Das Antriebsritzel 217 ist drehfest mit einer Hohlwelle 231 verbunden, welche einteilig mit einem Sonnenrad 212 des Differentialgetriebes 2 ausgeführt ist. Innerhalb dieser Hohlwelle 231 verläuft die Eingangswelle 6. Das Abtriebsritzel 218 ist prinzipiell eine hohle, außenverzahnte Welle, welche mittels einer angestellten Kegelrollenlagerung in x-Anordnung in dem Lagergehäuse 223 gelagert ist.

Zur Herstellung des horizontalen Winkels und des nicht näher dargestellten vertikalen Winkels ist die Gelenkwelle 210 mittels eines Kreuzgelenkes gelenkig radial innerhalb des Abtriebsritzels 218 angeordnet. Ferner ist die Gelenkwelle 210 in Fahrtrichtung vorn - d.h. an deren anderem Ende - mit einem weiteren Kreuzgelenk gelenkig an die nicht näher dargestellte Kegelritzelwelle des Vorderachsgetriebes gekoppelt.

Bei der Getriebevorrichtung gemäß Fig. 4 sind das Antriebsritzel 217 und das mit diesem kämmende Abtriebsritzel 218 jeweils als kegeliges Stirnrad ausgeführt. Die Gelenkwelle 210 ist auf der in Fahrtrichtung rechts liegenden Seite des nicht näher dargestellten Antriebsmotors angeordnet.

Ferner weist die Getriebevorrichtung zur Dämpfung von Lastschlägen eine temperaturabhängig drehmomentdämpfende Reibkupplung 236 auf. Eine solche temperaturabhängige Reibkupplung 236 ist in der nicht vorveröffentlichten DE 101 11 257.2 beschrieben. Das Sonnenrad 212 und ein Planetenträger des Differentialgetriebes 2 sind mittels der Reibkupplung 236 miteinander gekuppelt. Das schlupffrei übertragbare Kupplungsdrehmoment der Reibkupplung 236 ist so klein ist, dass diese bei Drehmomentstößen und bei Drehmomentdifferenzen, wie sie bei üblichem Kraftfahrzeugbetrieb normalerweise zwischen den beiden Differentialteilen auftreten, automatisch in Reibungs-Schlupfbetrieb geht. Die Reibkupplung 236 ist mit einem temperaturabhängigen Einstellmittel versehen, welches in einem vorbestimmten Temperaturbereich den Kupplungsschließdruck und damit das übertragbare Kupplungsdrehmoment abhängig von der Kupplungstemperatur mit steigender Kupplungstemperatur verkleinert und mit abnehmender Kupplungstemperatur erhöht.

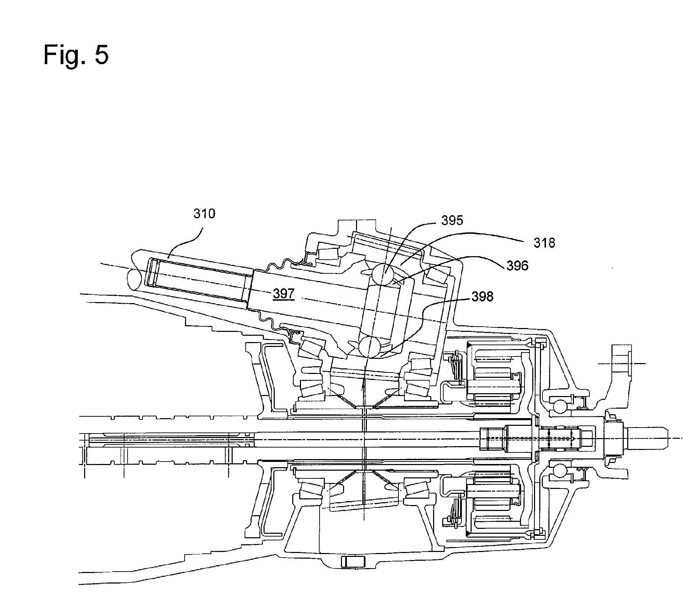

Fig. 5 zeigt eine detailliert und geschnitten dargestellte Getriebevorrichtung ähnlich der aus Fig. 4, wobei jedoch anstelle des Kreuzgelenkes ein anderer Gelenktyp Anwendung findet. Bei diesem homokinetischen Gelenktyp sind gerundete Nutenbahnen 398 in ein Abtriebsritzel 318 eingearbeitet. Die Nutenbahnen 398 erstrecken sich im wesentlichen parallel zur Rotationsachse des Abtriebsritzels 318, welches als hohle außenverzahnte Welle ausgeführt ist. Korrespondierend zu diesen Nutenbahnen 398 weist ein mit der Gelenkwelle 310 verbundenes Gelenkteil 397 Aufnahmenuten 396 zur Aufnahme von Kugeln 395 auf. Über diese Kugeln 395 wird das Antriebsmoment für die Vorderachse übertragen.

Grundsätzlich ist in weiteren alternativen Ausgestaltungen der Einsatz von sämtlichen bekannten homokinetischen Gelenken möglich. So bieten sich beispielsweise auch Doppeloffset-/Kugel-/Receppa-/Tripoden- und Ringgelenke an.

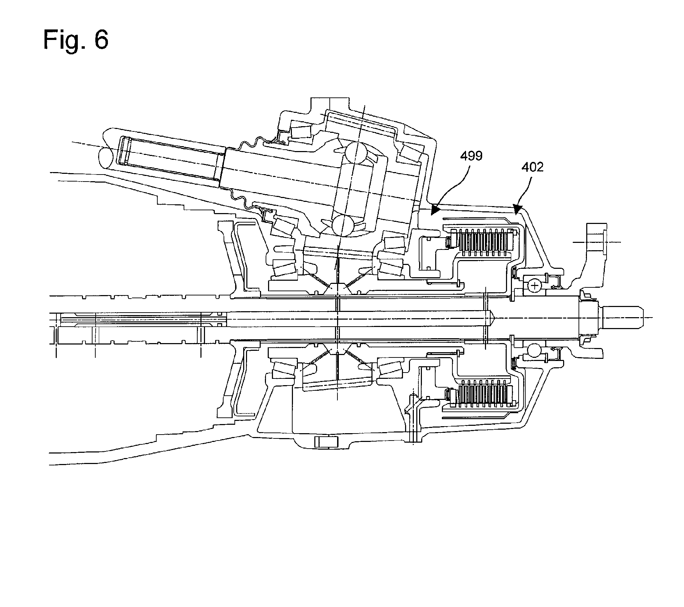

Fig. 6 zeigt eine detailliert und geschnitten dargestellte Getriebevorrichtung ähnlich der aus Fig. 5, wobei jedoch für das Verteilergetriebe anstelle eines Differentialgetriebes eine im Ölbad laufende Lamellenkupplung 402 Anwendung findet.

Die Kraftverteilung auf die Vorderachse und die Hinterachse wird bei einer solchen Lamellenkupplung 402 stufenlos variabel mittels eines Stellgliedes 499 eingestellt. Dabei können die aktuellen Erfordernisse berücksichtigt werden. So steht die Ansteuerung des Stellgliedes 499 per Datenbus im Informationsaustausch mit den Rad-, Fahrwerks- und Lenkungssensoren.

Das in den verschiedenen Ausführungsformen gezeigte Kraftfahrzeuggetriebe kann sowohl ein Automatikgetriebe, ein Handschaltgetriebe, ein halbautomatisiertes Vorgelegegetriebe ein vollautomatisiertes Vorgelegegetriebe als auch ein Stufenlosgetriebe sein. Stufenlosgetriebe unterteilen sich im wesentlichen in Umschlingungsgetriebe und Wälzkörpergetriebe wie z.B. Toroidgetriebe.

Bei den beschriebenen Ausgestaltungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Getriebevorrichtung für ein Kraftfahrzeug, die ein für einen Längseinbau vorgesehenes Kraftfahrzeuggetriebe (Automatikgetriebe 14) mit einer im eingebauten Zustand zum Heck des Kraftfahrzeugs weisenden Getriebeausgangswelle (13) aufweist, die über eine Abtriebswelle (12) eines Seitenabtriebs (16) und über eine Gelenkwelle (10) antriebsmäßig mit einer Eingangswelle (11) eines Vorderachsgetriebes (15) verbindbar ist, wobei zur Reduzierung zumindest eines Knickwinkels (ε₁, ε₂) der Gelenkwelle (10) wenigstens eine mit der Gelenkwelle (10) korrespondierende Welle (Eingangswelle 11, Abtriebswelle 12) zur Getriebeausgangswelle (13) des Kraftfahrzeuggetriebes (14) verschwenkt ist,
und wobei zumindest ein Zahnrad (17, 18, 19) des Seitenabtriebs (16) kegelig ausgeführt ist.

2. Getriebevorrichtung nach Anspruch 1,
**dadurch gekennzeichnet,**
**daß** die Getriebeausgangswelle (13) mit einer Eingangswelle eines Hinterachsgetriebes antriebsmäßig verbindbar ist.

3. Getriebevorrichtung nach Anspruch 1 oder 2,
**dadurch gekennzeichnet,**
**daß** die mit der Gelenkwelle (10) korrespondierende Eingangswelle (11) des Vorderachsgetriebes (15) zur Getriebeausgangswelle (13) des Kraftfahrzeuggetriebes (14) verschwenkt ist.

4. Getriebevorrichtung nach Anspruch 3,
**dadurch gekennzeichnet,**
**daß** die Eingangswelle (11) des Vorderachsgetriebes (15) vertikal und/oder horizontal um einen Winkel (α_{H}, α_{V}) zwischen 1° und 10° verschwenkt ist.

5. Getriebevorrichtung nach Anspruch 3 oder 4,
**dadurch gekennzeichnet,**
**daß** das Vorderachsgetriebe (15) ein Winkelgetriebe mit einem Kreuzwinkel (δ) ungleich 90° aufweist.

6. Getriebevorrichtung nach einem der vorhergehenden Ansprüche,
**dadurch gekennzeichnet,**
**daß** die mit der Gelenkwelle (10) korrespondierende Abtriebswelle (12) des Seitenabtriebs (16) zur Getriebeausgangswelle (13) des Kraftfahrzeuggetriebes (14) verschwenkt ist.

7. Getriebevorrichtung nach Anspruch 6,
**dadurch gekennzeichnet,**
**daß** die mit der Gelenkwelle (10) korrespondierende Abtriebswelle (12) des Seitenabtriebs (16) vertikal und/oder horizontal um einen Winkel (β_{H}, β_{V}) zwischen 1° und 20° verschwenkt ist.

8. Getriebevorrichtung nach Anspruch 6 oder 7,
**dadurch gekennzeichnet**,

9. Getriebevorrichtung nach Anspruch 8,
**dadurch gekennzeichnet,**
**daß** der Seitenabtrieb (16) von einer Räderkette mit mindestens drei Zahnrädern (17, 18, 19) gebildet ist.

10. Getriebevorrichtung nach Anspruch 9,
**dadurch gekennzeichnet,**
**daß** eine Rotationsachse (20) eines Zwischenzahnrads (18) des Seitenabtriebs (16) zur Getriebeausgangswelle (13) verschwenkt ausgeführt ist.

11. Getriebevorrichtung nach Anspruch 9 oder 10,
**dadurch gekennzeichnet,**
**daß** der Seitenabtrieb (16) um eine Rotationsachse (21) verschwenkt ausgeführt ist.

12. Getriebevorrichtung nach einem der vorhergehenden Ansprüche,
**dadurch gekennzeichnet,**
**daß** das Kraftfahrzeuggetriebe (14) ein Getriebegehäuse (22) mit einer angeformten Lagereinheit (23) für den Seitenabtrieb (16) aufweist.
